# EUROPEAN PATENT APPLICATION

(11) **EP 4 692 683 A1**
(43) Date of publication of application: **11.02.2026**
(21) Application number: 24842841.9
(22) Date of filing: 03.06.2024
(51) Int. Cl.: F25B 39/02, F25B 1/00

(54) **COOLING DEVICE**

(30) Priority: 19.07.2023 JP 2023117815
(71) Applicant: Daikin Industries, Ltd., Osaka-shi, Osaka 530-0001 (JP)
(72) Inventor: MIMURA, Takuya, Osaka-shi, Osaka 530-0001 (JP); SAGIMORI, Tomokazu, Osaka-shi, Osaka 530-0001 (JP)
(74) Representative: Goddar, Heinz J.
(86) International application number: PCT/JP2024/020248
(87) International publication number: WO 2025/018045

(57) **Abstract**

A cooling apparatus includes a refrigerant circuit (10) to which a compressor (12), a condenser (13), an expansion mechanism (14), and an evaporator (15) are connected, a housing (11) housing the compressor (12), the condenser (13), and the expansion mechanism (14), and a capturing portion (22, 112) configured to capture sludge in liquid (E), the evaporator (15) includes a coil portion (15a) disposed below the housing (11), and the capturing portion (22, 112) is disposed below the housing (11).

## Description

### TECHNICAL FIELD

The present disclosure relates to a cooling apparatus.

### BACKGROUND ART

An immersion-type liquid cooling apparatus described in Patent Document 1 includes a refrigerant circuit in which a compressor, a condenser, an expansion valve, and an evaporator are connected, and cools liquid by immersing the evaporator in the liquid. The evaporator includes a coil portion. The coil portion has an inner refrigerant pipe helically wound along an up-down direction, and an outer refrigerant pipe surrounding the inner refrigerant pipe and helically wound along the up-down direction. The inner refrigerant pipe and the outer refrigerant pipe are coated with a fluorine coating material in order to prevent sludge such as grinding dust contained in working fluid from adhering thereto.

### CITATION LIST

### PATENT DOCUMENT

Patent Document 1: Japanese Unexamined Patent Publication No. 2015-068606

### SUMMARY OF THE INVENTION

### TECHNICAL PROBLEM

Even if the coil portion is coated with the fluorine coating material, adhesion of the sludge cannot be completely prevented, and the sludge slightly adheres to the coil portion. For this reason, maintenance process on the coil portion is performed.

However, when performing the maintenance process, it is difficult to remove the sludge adhering to the inside of the coil portion because it is hard to reach inside the coil portion. Moreover, since the coating of the fluorine coating material is susceptible to friction, wiping the surface of the coil portion to remove sludge during the maintenance process may result in peeling of the coating of the fluorine coating material from the surface of the coil portion.

It is an object of the present disclosure to provide a cooling apparatus with improved maintainability.

### SOLUTION TO THE PROBLEM

A cooling apparatus of a first aspect includes: a refrigerant circuit (10) to which a compressor (12), a condenser (13), an expansion mechanism (14), and an evaporator (15) are connected, a housing (11) housing the compressor (12), the condenser (13), and the expansion mechanism (14), a coil portion (15a) included in the evaporator (15), disposed below the housing (11), and immersed in liquid (E) to cool the liquid (E), and a capturing portion (22, 112) configured to capture sludge in the liquid (E), and the capturing portion (22, 112) is disposed below the housing (11).

In the first aspect, the sludge is captured by the capturing portion (22, 112), and therefore, it is possible to reduce adherence of the sludge to the coil portion (15a) and therefore improve the maintainability.

A second aspect is an embodiment of the first aspect. In the second aspect, the capturing portion (22) includes a magnet (22b), and captures the sludge by a magnetic force of the magnet (22b).

In the second aspect, the sludge adhering to the surface of the capturing portion (22) is wiped off by the magnetic force of the magnet (22b), and therefore, the capturing portion (22) can be reused.

A third aspect is an embodiment of the first or second aspect. In the third aspect, the capturing portion (22, 112) is disposed inside the coil portion (15a).

In the third aspect, it is possible to effectively reduce adhesion of the sludge to the coil portion (15a).

A fourth aspect is an embodiment of the third aspect. In the fourth aspect, the cooling apparatus further includes a stirrer (17) disposed inside the coil portion (15a) and configured to stir the liquid (E) to generate a stirring flow in the liquid (E), and the capturing portion (22) is disposed in a region where the stirring flow is generated.

In the fourth aspect, the sludge can be effectively captured by the capturing portion (22) using the stirring flow.

A fifth aspect is an embodiment of any one of the first to fourth aspects. In the fifth aspect, the capturing portion (22) has a rod shape extending along an up-down direction.

In the fifth aspect, the sludge present in a region having a width in the up-down direction in the liquid (E) can be captured by the capturing portion (22).

A sixth aspect is an embodiment of the fifth aspect. In the sixth aspect, the capturing portion (22) has a circular outer shape in a section perpendicular to the up-down direction.

In the sixth aspect, the sludge can effectively adhere to the outer surface of the capturing portion (22).

A seventh aspect is an embodiment of any one of the first to sixth aspects. In the seventh aspect, the capturing portion (22) is detachably attached to the housing (11) or a leg (18) provided on a lower surface (11a) of the housing (11).

In the seventh aspect, the capturing portion (22) can be detached from the housing (11) or the leg (18), and maintenance can be performed on the capturing portion (22) independently of the housing (11) or the leg (18).

An eighth aspect is an embodiment of the seventh aspect. In the eighth aspect, the housing (11) or the leg (18) is provided with a plurality of portions where the capturing portion (22) is attachable.

In the eighth aspect, the portion where the capturing portion (22) is to be attached can be selected.

A ninth aspect is an embodiment of any one of the first to eighth aspects. In the ninth aspect, the lower end of the capturing portion (22) is located below a lower end of the coil portion (15a).

In the ninth aspect, it is possible to effectively reduce adhesion of the sludge to the coil portion (15a).

A tenth aspect is an embodiment of any one of the first to ninth aspects. In the tenth aspect, the capturing portion (22) is disposed inside the coil portion (15a), and is detachably attached to the lower surface (11a) of the housing (11), and a clearance (C) is provided between the coil portion (15a) and the lower surface (11a) of the housing (11).

In the tenth aspect, maintenance can be easily performed on the capturing portion (22).

An eleventh aspect is an embodiment of the first aspect. In the eleventh aspect, the cooling apparatus further includes: a non-magnetic tube portion (110); a magnet (120) provided in the tube portion (110) and configured to cause the sludge to adhere to an outer surface of the tube portion (110) by a magnetic force; a moving portion (130) for moving the magnet (120) in the tube portion (110); and a separation portion (140) configured to disconnect the magnet (120) moved by the moving portion (130) and the sludge adhering to the outer surface of the tube portion (110), the moving portion (130) includes a string-shaped member coupled to the magnet (120) and extending to an outside of the tube portion (110) through an opening (111) in one end portion (110a) of the tube portion (110), and the tube portion (110) includes the capturing portion (112) immersed in the liquid (E).

In the eleventh aspect, the sludge in the liquid (E), which adheres to the outer surface of the tube portion (110), is moved to the outside of the liquid (E) by the magnetic force of the magnet (120) by moving the magnet (120) by the moving portion (130), and the magnetic force of the magnet (120) acting on the sludge is reduced by disconnecting the magnet (120) and the sludge by the separation portion (140), so that the sludge can be separated and collected from the outer surface of the tube portion (110).

### BRIEF DESCRIPTION OF THE DRAWINGS

[FIG. 1] FIG. 1 is a perspective view of a configuration of a cooling apparatus.
[FIG. 2] FIG. 2 is a schematic view of a configuration of a refrigerant circuit.
[FIG. 3] FIG. 3 is an enlarged sectional view of a coil portion.
[FIG. 4] FIG. 4 is a view of the cooling apparatus as viewed from below.
[FIG. 5] FIG. 5 is a view of a region where a capturing portion is preferably installed.
[FIG. 6] FIG. 6 is a view of a position of the capturing portion relative to flow of liquid in a tank.
[FIG. 7] FIGS. 7A to 7C are plan views of a stirring flow generated in the liquid by a stirrer.
[FIG. 8] FIG. 8 is a diagram illustrating a procedure for cleaning the capturing portion.
[FIG. 9] FIG. 9 is a sectional view of a sludge collection device.
[FIG. 10] FIG. 10A is a sectional end view of a lower surface of a housing, as viewed from below. FIG. 10B is a sectional end view of a side surface of the housing as viewed in the horizontal direction.
[FIG. 11] FIG. 11A is a sectional end view of a separation portion as viewed in the horizontal direction. FIG. 11B is a sectional end view of a flange portion as viewed in the horizontal direction.
[FIG. 12] FIG. 12 is a sectional view of the sludge collection device.
[FIG. 13] FIG. 13 is a sectional view of the sludge collection device.

### DESCRIPTION OF EMBODIMENTS

Embodiments of the present disclosure will be described in detail below with reference to the drawings. The present disclosure is not limited to the embodiments shown below, and various changes can be made within the scope without departing from the technical concept of the present disclosure. Since each of the drawings is intended to illustrate the present disclosure conceptually, dimensions, ratios, or numbers may be exaggerated or simplified as necessary for the sake of ease of understanding. The same reference characters denote the same or equivalent components in each embodiment, each variation, and the drawings, and the detailed description thereof, the description of advantages associated therewith, and other descriptions will not be repeated.

### -Cooling Apparatus Unit-

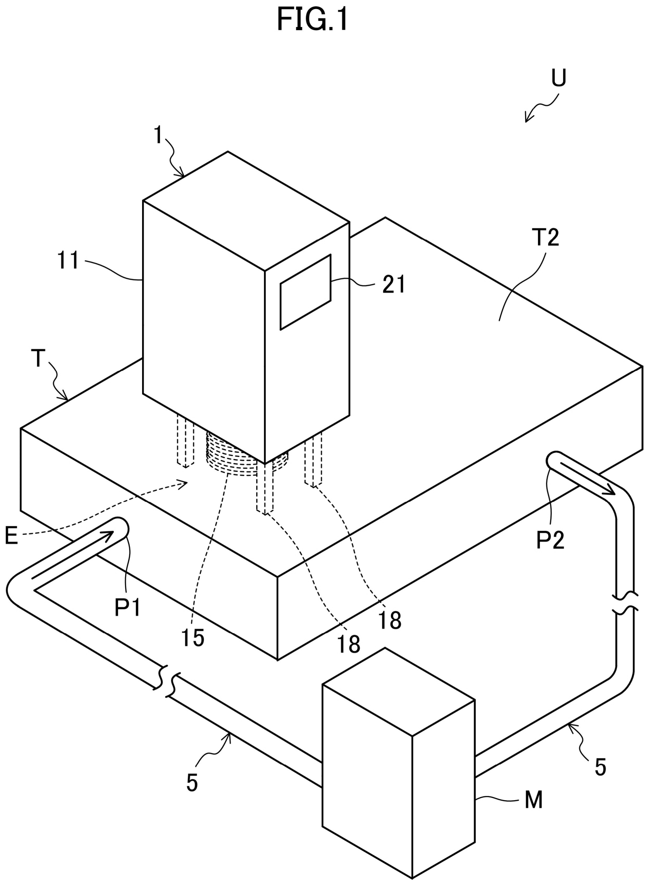

As illustrated in FIG. 1, a cooling apparatus unit (U) includes a machine tool (M) and a tank (T), and is applied to a system in which liquid (E) circulates through the machine tool (M) and the tank (T). The cooling apparatus unit (U) cools the liquid (E) in the tank (T). The machine tool (M) of this embodiment is a machine that performs cutting, such as a grinding machine or a machining center. The liquid (E) is, for example, working fluid such as grinding fluid and a spindle lubricant, for a machine tool.

The tank (T) stores the liquid (E). During operation of the machine tool (M), the amount of liquid (E) stored in the tank (T) is maintained substantially constant. The tank (T) is provided with an inflow port (P1) and an outflow port (P2). A pipe (5) connected to the machine tool (M) is connected to the inflow port (P1) and the outflow port (P2). A pump (not illustrated) is connected to the pipe (5). The pump adjusts the flow direction and the flow rate of the liquid (E) flowing through the pipe (5). The liquid (E) having flowed out of the machine tool (M) flows into the tank (T) through the inflow port (P1) by operation of the pump. The liquid (E) in the tank (T) flows out toward the machine tool (M) through the outflow port (P2).

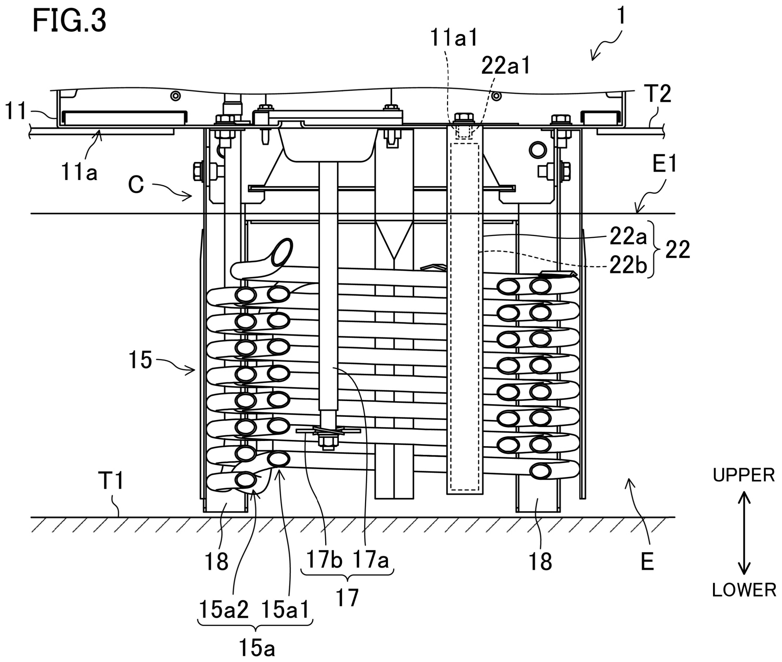

The cooling apparatus unit (U) includes a cooling apparatus (1). The cooling apparatus (1) is installed on the tank (T). The cooling apparatus (1) is placed on a plate-shaped member (T2) (see FIG. 3) forming the upper surface of the tank (T). The liquid (E) having flowed out of the tank (T) is heated by the machine tool (M). The heated liquid (E) flows into the tank (T), and is cooled by the cooling apparatus (1). As a result, an increase in the temperature of the liquid (E) in the tank (T) is suppressed. In the following description, an up-down direction indicates the vertical direction when the cooling apparatus (1) is installed on the tank (T) and is in a posture for performing an operation of cooling the liquid (E) in the tank (T).

### -Configuration of Cooling Apparatus-

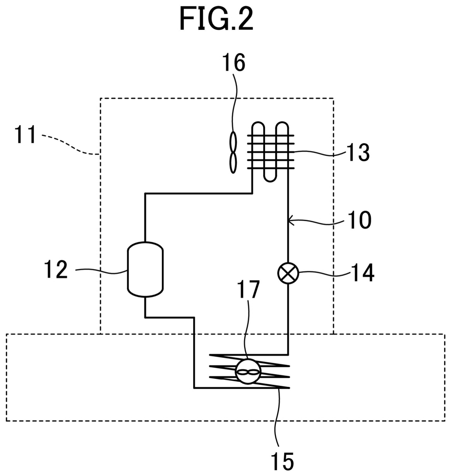

As illustrated in FIGS. 1 and 2, the cooling apparatus (1) includes a housing (11), a compressor (12), a condenser (13), an expansion mechanism (14), an evaporator (15), a blower fan (16), a stirrer (17), and an operation panel (21). The compressor (12), the condenser (13), the expansion mechanism (14), and the evaporator (15) are connected in this order to a refrigerant circuit (10). The refrigerant circuit (10) is filled with refrigerant. The refrigerant circuit (10) performs a vapor compression refrigeration cycle. The compressor (12), the condenser (13), and the expansion mechanism (14) are housed in the housing (11).

### -Housing-

As illustrated in FIGS. 1 and 3, the housing (11) is formed in a box shape extending in the up-down direction. The housing (11) is disposed above the liquid (E) in the tank (T). legs (18) are attached to the lower surface (11a) of the housing (11). The legs (18) are provided on the lower surface (11a) of the housing (11), and protrude downward from the lower surface (11a) of the housing (11). The lower ends of the legs (18) are immersed in the liquid (E) in the tank (T). The lower ends of the legs (18) may be separated from the bottom surface (T1) of the tank (T), or may be placed on the bottom surface (T1) of the tank (T). Four legs (18) are provided on the lower surface (11a) of the housing (11). The lower surface (11a) of the housing (11) is placed on the plate-shaped member (T2) forming the upper surface of the tank (T). The housing (11) of the cooling apparatus (1) is fixed to the plate-shaped member (T2) with, for example, a bolt. The plate-shaped member (T2) has a hole, and the legs (18), a coil portion (15a), a stirring portion (17b), and a capturing portion (22) are immersed in the liquid (E) in the tank (T) through such the hole (see FIG. 3).

### -Compressor-

As illustrated in FIG. 2, the compressor (12) sucks and compresses low-pressure gas refrigerant. The compressor (12) discharges the compressed refrigerant. The compressor (12) is a variable capacity compressor in which power is supplied from an inverter circuit to an electric motor. In other words, the compressor (12) is capable of adjusting the operation frequency (number of rotations) of the electric motor. The compressor (12) does not have to include the inverter circuit.

### -Condenser-

The condenser (13) exchanges heat between air transferred by the blower fan (16) and the refrigerant. Specifically, in the condenser (13), the refrigerant dissipates heat to air, and is condensed. The blower fan (16) is disposed in the vicinity of the condenser (13), and transfers air passing through the condenser (13). The condenser (13) may be a water-cooled condenser that exchanges heat between water and refrigerant.

### -Expansion Mechanism-

The expansion mechanism (14) decompresses the refrigerant. The expansion mechanism (14) includes, for example, an electric expansion valve whose opening degree is adjustable. The expansion mechanism (14) may include a temperature-sensitive expansion valve, a capillary tube, or the like.

### -Evaporator-

The evaporator (15) exchanges heat between the liquid (E) in the tank (T) and the refrigerant. Specifically, in the evaporator (15), the refrigerant absorbs heat from the liquid (E), and is evaporated. The evaporator (15) includes the coil portion (15a) formed in a coil shape along the up-down direction. The coil portion (15a) is disposed below the housing (11), and is disposed so as to be immersed in the liquid (E) in the tank (T). The legs (18) are disposed outside the coil portion (15a).

The refrigerant flows through the coil portion (15a). Heat exchange between the liquid (E) and the refrigerant is performed by the coil portion (15a), and the liquid (E) is cooled.

A clearance (C) is provided between the coil portion (15a) and the lower surface (11a) of the housing (11). For example, the cooling apparatus (1) is installed on the tank (T) such that the liquid surface (E1) of the liquid (E) is located in the clearance (C).

The coil portion (15a) includes an inner refrigerant pipe (15a1) helically wound along the up-down direction, and an outer refrigerant pipe (15a2) disposed outside the inner refrigerant pipe (15a1) and helically wound along the up-down direction. As a result, the surface areas of the refrigerant pipes (15a1, 15a2) are increased and a heat exchange efficiency is improved while suppressing an increase in the length of the coil portion (15a) in the up-down direction. The refrigerant pipes (15a1, 15a2) are formed by branching a single refrigerant pipe into two pipes on the upstream side of the compressor (12) and the downstream side of the expansion mechanism (14) (see FIG. 2), and the refrigerant in the refrigerant pipes (15a1, 15a2) flows from the expansion mechanism (14) toward the compressor (12). Moreover, in this embodiment, the refrigerant pipes (15a1, 15a2) are helically wound twice in the coil portion (15a), but the refrigerant pipe may be helically wound once, and the number of times of winding of the refrigerant pipe is not particularly limited.

In FIGS. 3, 6, and 8, the refrigerant pipes (15a1, 15a2) of the coil portion (15a) are illustrated in a sectional view in which part (part on the near side of the drawing) of these pipes is cut in the up-down direction. Actually, the refrigerant pipes (15a1, 15a2) of the coil portion (15a) helically extend as illustrated in FIG. 1.

### -Stirrer-

The stirrer (17) is disposed so as to be immersed in the liquid (E) in the tank (T). The stirrer (17) stirs the liquid (E) in the tank (T) to generate a flow (stirring flow) in the liquid (E) in the tank (T). The stirrer (17) is disposed inside the coil portion (15a). By disposing the stirrer (17) in the vicinity of the coil portion (15a), the heat exchange between the refrigerant and the liquid (E) is promoted. The stirrer (17) includes a shaft portion (17a) extending downward of the lower surface (11a) of the housing (11), and the stirring portion (17b) fixed to the shaft portion (17a). The stirring portion (17b) is a blade-shaped member. The stirrer (17) (shaft portion (17a) and stirring portion (17b)) is rotated by the power of a stirring motor provided in the housing (11). The stirrer (17) is rotated to stir the liquid (E) in the tank (T).

### -Operation Panel-

As illustrated in FIG. 1, the cooling apparatus unit (U) includes the operation panel (21). The operation panel (21) receives a predetermined operation instruction by a user's operation. The operation panel (21) includes a display (not illustrated) that displays the liquid temperature. The operation panel (21) is disposed, for example, on the front surface of the housing (11).

### -Operation-

As illustrated in FIGS. 1 to 3, the refrigerant compressed by the compressor (12) flows through the condenser (13). In the condenser (13), the refrigerant dissipates heat to air, and is condensed. In a case where the condenser (13) is the water-cooled condenser, the refrigerant dissipates heat to water, and is condensed. The refrigerant having dissipated heat in the condenser (13) is decompressed by the expansion mechanism (14), and then flows through the evaporator (15). In the evaporator (15) (coil portion (15a)), the refrigerant absorbs heat from the liquid (E), and is evaporated. Since the liquid (E) cooled by the evaporator (15) is stirred by the stirrer (17), an increase in the temperature of the liquid in the tank (T) is suppressed. The refrigerant evaporated in the evaporator (15) is sucked into the compressor (12), and is compressed again.

### -Capturing Portion-

As illustrated in FIG. 3, the cooling apparatus (1) includes the capturing portion (22). The capturing portion (22) captures sludge in the liquid (E). The sludge is, for example, metal powder, grinding dust (chips), or an abrasive. In this embodiment, the sludge is a magnetic substance.

The capturing portion (22) includes a pipe portion (22a) and a magnet (22b). The pipe portion (22a) is a hollow member. The pipe portion (22a) is formed of, for example, a corrosion-resistant material (SUS304 or the like) such as stainless steel. The pipe portion (22a) has a rod shape extending along the up-down direction. The pipe portion (22a) has a circular outer shape in a section perpendicular to the up-down direction. The magnet (22b) is a permanent magnet. The magnet (22b) is a rod-shaped member extending along the up-down direction, and is disposed inside the pipe portion (22a). The magnet (22b) is disposed inside the corrosion-resistant pipe portion (22a), and therefore, rust on the surface of the magnet (22b) is reduced. The sludge in the liquid (E) adheres to the outer surface of the pipe portion (22a) by the magnetic force of the magnet (22b).

By forming the outer shape of the section of the pipe portion (22a) perpendicular to the up-down direction into the circular shape, it is possible to reduce variation in a distance from the center of the magnet (22b) to the outer surface of the pipe portion (22a) and to cause the magnetic force of the magnet (22b) to effectively and evenly act on the outer surface of the pipe portion (22a). As a result, the sludge can effectively adhere to the outer surface of the capturing portion (22). Further, by forming the outer shape of the section of the pipe portion (22a) perpendicular to the up-down direction into the circular shape, it is possible to easily wipe off the sludge adhering to the outer surface of the pipe portion (22a).

The capturing portion (22) is separated from the coil portion (15a), and is disposed below the housing (11). The capturing portion (22) is located at a position separated from the coil portion (15a). The capturing portion (22) protrudes downward of the housing (11). The capturing portion (22) is disposed in a region where the stirring flow is generated by the stirrer (17). The stirring flow indicates the flow of the liquid (E) generated by rotation of the stirrer (17).

The capturing portion (22) is detachably attached to the lower surface (11a) of the housing (11). A screw (22a1) is formed at the upper end of the pipe portion (22a). The screw (22a1) of the pipe portion (22a) is formed by, for example, tapping. A thread (l1a1) is formed at the lower surface (11a) of the housing (11). The thread (11a1) of the housing (11) is, for example, a thread formed at a bolt implanted in the lower surface (11a) of the housing (11). The capturing portion (22) is attached to the housing (11) by fastening the screw (22a1) of the pipe portion (22a) to the thread (l1a1) of the housing (11).

The capturing portion (22) is disposed inside the coil portion (15a). The lower end of the capturing portion (22) (magnet (22b)) is located lower than the lower end of the coil portion (15a) and higher than the bottom surface (T1) of the tank (T).

The magnetic flux density of the outer surface of the capturing portion (22) is preferably 0.8 T or more from the viewpoint of causing the sludge such as fine iron powder to effectively adhere to the outer surface of the capturing portion (22). Moreover, if the magnetic flux density of the outer surface of the capturing portion (22) is too high during maintenance of the capturing portion (22), it is difficult to peel and remove the sludge adhering to the outer surface of the capturing portion (22) from the outer surface of the capturing portion (22). Thus, the magnetic flux density of the outer surface of the capturing portion (22) is preferably 1.2 T or less from the viewpoint of easily removing the sludge adhering to the outer surface of the capturing portion (22) from the outer surface of the capturing portion (22) at the time of maintenance of the capturing portion (22). In order to effectively ensure a magnetic flux density of 0.8 T or more and 1.2 T or less on the outer surface of the capturing portion (22), the capturing portion (22) preferably has a diameter (the diameter of the pipe portion (22a)) of 15 mm or more and 35 mm or less.

### -Heater-

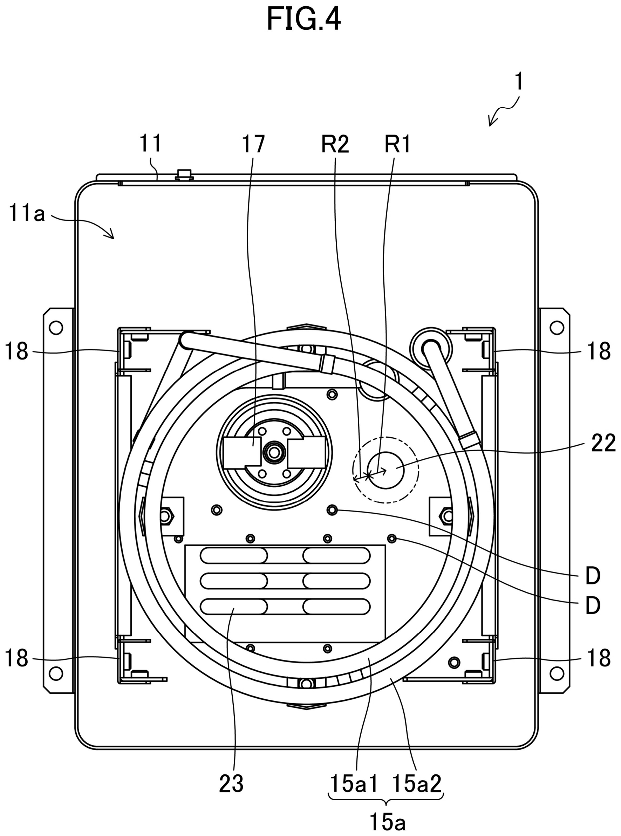

FIG. 4 is a view of the cooling apparatus (1) as viewed from below. As illustrated in FIG. 4, the cooling apparatus (1) may include a heater (23). The heater (23) is attached to the lower surface (11a) of the housing (11), and protrudes downward so as to be immersed in the liquid (E) in the tank (T). The heater (23) is disposed inside the coil portion (15a). The heater (23) is used to increase the temperature of the liquid (E) to a predetermined temperature when the liquid (E) in the tank (T) is too cold, for example, in midwinter.

### -First Example of Position of Capturing Portion-

A distance from the center of the capturing portion (22) to a protrusion (D) in the horizontal direction is larger than R1 mm. R1 is the radius of the capturing portion (22), and is, for example, a value of 7.5 mm or more and 17.5 mm or less (7.5 mm ≤ R1 ≤ 17.5 mm). The protrusion (D) is a member such as a screw fastened to the lower surface (11a) of the housing (11), or a portion protruding from the lower surface (11a) of the housing (11), such as a protrusion formed by burring or the like. In a case where there is a plurality of protrusions (D) on the lower surface (11a) of the housing (11), the distance from the center of the capturing portion (22) to each of the plurality of protrusions (D) in the horizontal direction is larger than R1 mm. With this configuration, the capturing portion (22) can be installed without interference by the protrusion (D).

### -Second Example of Position of Capturing Portion-

Hereinafter, members installed below the housing (11) other than the capturing portion (22), such as the coil portion (15a), the stirrer (17), and the heater (23), may be collectively referred to as a peripheral member.

Preferably, the distance from the center of the capturing portion (22) to the peripheral member in the horizontal direction is larger than the sum of R1 mm and R2 mm. R2 is a value set in consideration of the thickness of the sludge adhering to the outer surface of the capturing portion (22), and for example, is set to a value slightly larger than the maximum value of the thickness of the sludge assumed to adhere to the outer surface of the capturing portion (22). R2 is, for example, a value of 20 mm or more and 30 mm or less (20 mm ≤ R2 ≤ 30 mm). In this case, the sum of R1 mm and R2 mm is a value of 27.5 mm or more and 47.5 mm or less (27.5 mm ≤ R1 + R2 ≤ 47.5 mm).

With this configuration, it is possible to reduce adherence of the sludge to the peripheral member. As a result, it is possible to reduce problems such as an increase in the temperature of the liquid (E) and an increase in power consumption of the cooling apparatus (1) due to the sludge adhering to the coil portion (15a) and interfering with the heat exchange between the refrigerant and the liquid (E) and malfunction of the compressor (12) due to the refrigerant liquid returning from the coil portion (15a).

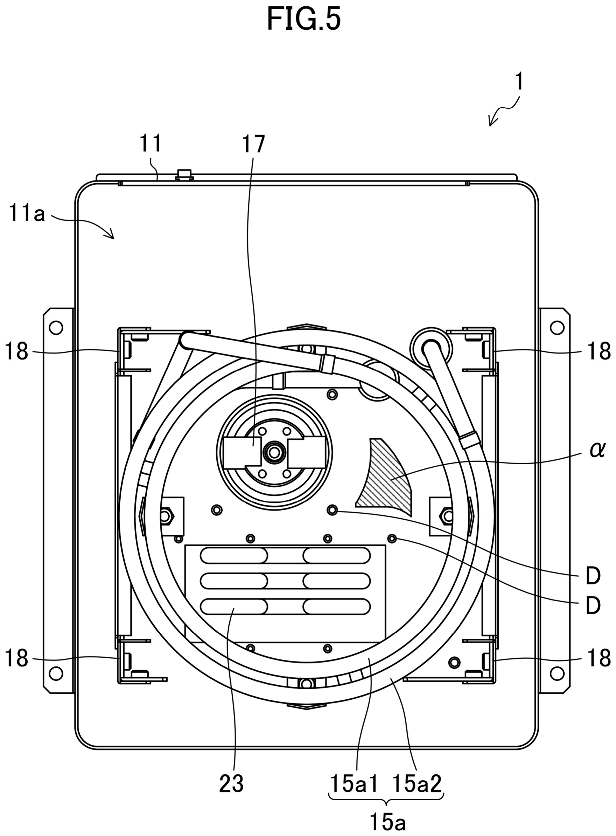

In this embodiment, for example, the capturing portion (22) may be installed in a region (α) illustrated in FIG. 5 in consideration of the first example of the position of the capturing portion and the second example of the position of the capturing portion. The region (α) is a region satisfying the condition in the first example of the position of the capturing portion (the distance from the center of the capturing portion (22) to the protrusion (D) in the horizontal direction is larger than R1 mm) and the condition in the second example of the position of the capturing portion (the distance from the center of the capturing portion (22) to the peripheral member in the horizontal direction is larger than the sum of R1 mm and R2 mm).

### -Third Example of Position of Capturing Portion-

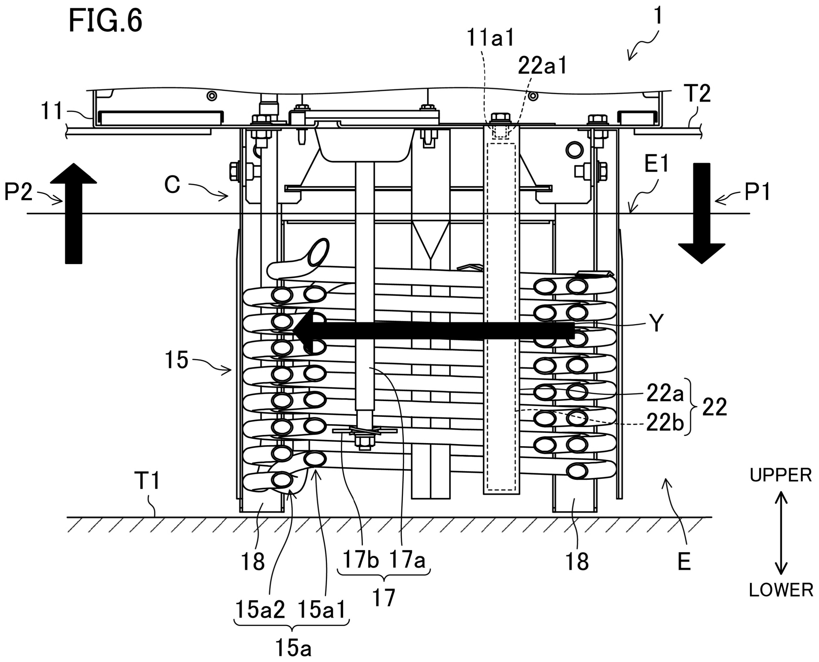

As illustrated in FIG. 6, the capturing portion (22) may be disposed upstream in a main flow direction (Y) below the housing (11). The main flow direction (Y) is a direction from the inflow port (P1) side toward the outflow port (P2) side of the tank (T), and indicates a main flow of the liquid (E) generated in the tank (T). This allows the capturing portion (22) to adsorb the sludge in the liquid (E) at the earliest possible timing when the liquid (E) flows along the main flow direction (Y) and is sent below the housing (11) in the tank (T). As a result, it is possible to effectively reduce adherence of the sludge to the outer surface of the coil portion (15a).

### -Fourth Example of Position of Capturing Portion-

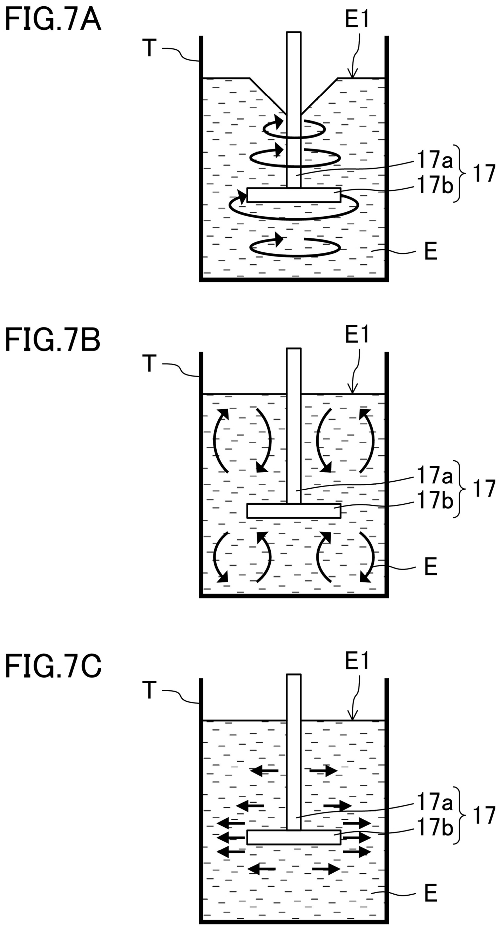

As illustrated in FIG. 7A, in a case where the stirring flow (branch flow) generated in the liquid (E) by the stirrer (17) is a swirling flow, the liquid (E) flows along a direction about the axis of the shaft portion (17a), and the liquid surface (E1) of the liquid (E) lowers around the shaft portion (17a) at the periphery of the stirrer (17). In this case, the capturing portion (22) is preferably disposed at a position apart from the stirrer (17).

### -Fifth Example of Position of Capturing Portion-

As illustrated in FIG. 7B, in a case where the stirring flow generated in the liquid (E) by the stirrer (17) is a circulating flow, the liquid (E) flows along a direction (up-down direction) parallel with the shaft portion (17a) around the stirrer (17). In this case, the capturing portion (22) is preferably disposed at a position close to the stirrer (17).

### -Sixth Example of Position of Capturing Portion-

As illustrated in FIG. 7C, in a case where the stirring flow generated in the liquid (E) by the stirrer (17) is a radial flow, the liquid (E) flows in a direction apart from the shaft portion (17a) along a direction (horizontal direction) perpendicular to the shaft portion (17a) of the stirrer (17). In this case, the capturing portion (22) is preferably disposed at a position close to the stirrer (17).

### -Procedure for Cleaning Capturing Portion-

As illustrated in FIGS. 1 and 3, the cooling apparatus (1) is placed on the bottom surface (T1) of the tank (T), whereby the coil portion (15a) and the capturing portion (22) are immersed in the liquid (E). The sludge in the liquid (E) adheres to the outer surface of the capturing portion (22) by the magnetic force of the magnet (22b). As a result, the sludge is captured by the capturing portion (22).

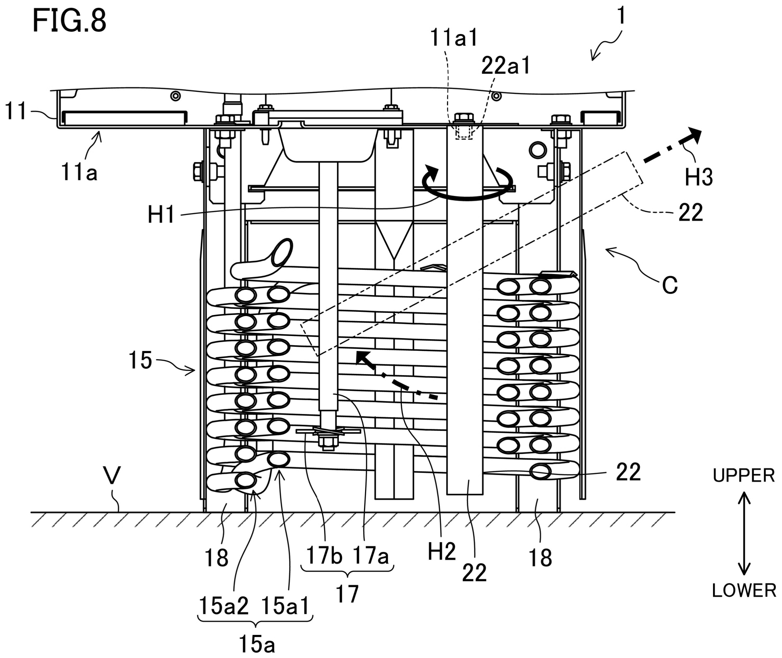

As illustrated in FIG. 8, the cooling apparatus (1) is then pulled up from the tank (T), and the coil portion (15a) and the capturing portion (22) are taken out of the liquid (E). The cooling apparatus (1) pulled up from the tank (T) is placed on a floor surface (V). Next, a worker inserts one's hand into the clearance (C) between the coil portion (15a) and the lower surface (11a) of the housing (11), grips the capturing portion (22) with the hand, and rotates the capturing portion (22) to loosen the screw (22a1), thereby detaching the capturing portion (22) from the housing (11) (see an arrow H1 in FIG. 8). Next, the worker takes out the capturing portion (22) from the inside of the coil portion (15a) through the clearance (C) (see arrows H2 and H3 in FIG. 8). Next, the worker cleans the capturing portion (22) by, for example, wiping the outer surface of the capturing portion (22) to remove the sludge from the outer surface of the capturing portion (22).

Thereafter, the worker returns the capturing portion (22) to the inside of the coil portion (15a) through the clearance (C). Next, the worker rotates the capturing portion (22) with the screw (22a1) of the capturing portion (22) abutting on the thread (11a1) of the housing (11). As a result, the screw (22a1) of the capturing portion (22) is fastened to the thread (11a1) of the housing (11), and the capturing portion (22) is attached to the housing (11).

As illustrated in FIGS. 1 and 3, the cooling apparatus (1) is then returned to an original position, and the coil portion (15a) and the capturing portion (22) are immersed in the liquid (E), whereby an operation of collecting the sludge from the liquid (E) is resumed.

### -Advantages-

As described above, the cooling apparatus (1) includes the refrigerant circuit (10) to which the compressor (12), the condenser (13), the expansion mechanism (14), and the evaporator (15) are connected, the housing (11) housing the compressor (12), the condenser (13), and the expansion mechanism (14), and the capturing portion (22, 112) configured to capture the sludge in the liquid (E). The evaporator (15) includes the coil portion (15a) disposed below the housing (11). The capturing portion (22, 112) is disposed below the housing (11). In this manner, by disposing both the capturing portion (22, 112) and the coil portion (15a) below the housing (11), the capturing portion (22, 112) is disposed around the coil portion (15a). As a result, the sludge is captured by the capturing portion (22, 112) around the coil portion (15a), and therefore, it is possible to effectively reduce adherence of the sludge to the coil portion (15a). As a result, it is possible to reduce execution of a complicated process such as a process of removing the sludge adhering to a location which is difficult to reach, such as an inner peripheral portion of the coil portion (15a), and therefore, it is possible to improve the maintainability of the cooling apparatus (1).

The capturing portion (22) can be reused by wiping off the sludge adhering to the surface of the capturing portion (22), and deterioration of the capturing portion (22) over time can be reduced using the magnet (22b) (permanent magnet) as the capturing portion (22). As a result, the service life of the capturing portion (22) can be effectively improved.

It will be understood that the embodiments and variations described above can be modified with various changes in form and details without departing from the spirit and scope of the claims (for example, (1) to (5) below). The embodiments, the variations thereof, and the other embodiments may be combined and replaced with each other without deteriorating intended functions of the present disclosure.
(1) A plurality of portions where the capturing portion (22) is attachable may be provided on the lower surface (11a) of the housing (11), and a portion where the capturing portion (22) is to be attached may be selected from the plurality of these portions. That is, a plurality of threads (11a1) is formed in the lower surface (11a) of the housing (11), and the thread (11a1) to which the capturing portion (22) is to be fastened can be selected from the plurality of threads (11a1). With this configuration, the portion where the capturing portion (22) is to be attached can be selected such that the capturing portion (22) is installed at a desired location. The desired location is, for example, a location where the distance from the center of the capturing portion (22) to the protrusion (D) in the horizontal direction is larger than R1 mm (see FIG. 4), a location where the distance from the center of the capturing portion (22) to the peripheral member in the horizontal direction is larger than the sum of R1 mm and R2 mm (see FIG. 4), a location upstream in the main flow direction (Y) below the housing (11) (see FIG. 6), or the like.
(2) In this embodiment, the capturing portion (22) is detachably attached to the lower surface (11a) of the housing (11) with the threads (11a1, 22a1) (see FIG. 3). However, the present invention is not limited thereto. For example, a magnet may be provided at a portion of the capturing portion (22) attached to the housing (11) and/or on the lower surface (11a) of the housing (11), and the capturing portion (22) may be detachably attached to the lower surface (11a) of the housing (11) by the magnetic force of such a magnet.
(3) In this embodiment, the capturing portion (22) is detachably attached to the lower surface (11a) of the housing (11) (see FIG. 3). However, the present invention is not limited thereto. The capturing portion (22) may be detachably attached to the leg (18), for example with a screw or a magnet.
(4) A first variation of the capturing portion (22) will be described. In this embodiment, the capturing portion (22) includes the magnet (22b), and captures the sludge by causing the sludge to adhere to the outer surface of the capturing portion (22) by the magnetic force of the magnet (22b) (see FIG. 3). However, the present invention is not limited thereto. The capturing portion (22) may include a filter, and may be configured to capture the sludge in the liquid (E) by filtering the liquid (E) in the tank (T) with the filter. In this case, the sludge is only required to be particles having such a predetermined size that the particles are captured by the filter, and does not necessarily have magnetic properties.
(5) A capturing portion (112), which is a second variation of the capturing portion (22), will be described.

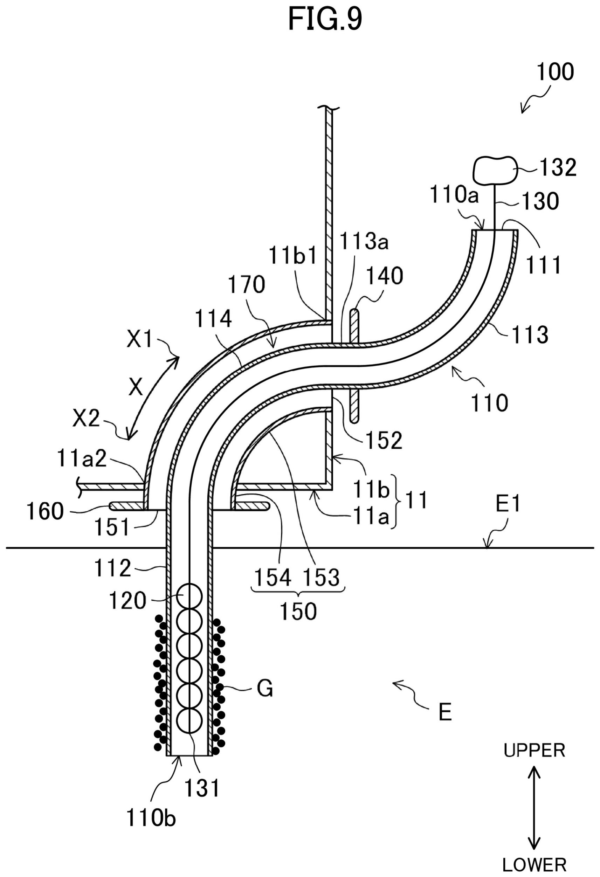

The cooling apparatus (1) includes a sludge recovery device (100). As illustrated in FIG. 9, the sludge recovery device (100) includes a tube portion (110), a magnet (120), a moving portion (130), a separation portion (140), an outer tube portion (150), and a flange portion (160). In FIGS. 9, 12, and 13, the coil portion (15a) and the stirrer (17) provided below the housing (11) are not shown.

The tube portion (110) is a hollow member. The tube portion (110) is a non-magnetic body. An opening (111) communicating with the inside and outside of the tube portion (110) is formed in one end portion (110a) of the tube portion (110). The other end portion (110b) of the tube portion (110) may be opened so as to communicate with the inside and outside of the tube portion (110), or may be closed. The other end portion (110b) side of the tube portion (110) is disposed in the liquid (E) in the tank (T), and the one end portion (110a) side of the tube portion (110) is disposed outside the liquid (E).

Hereinafter, a direction (X) in which the tube portion (110) extends may be referred to as a tube direction (X). In the tube direction (X), a direction toward the one end portion (110a) may be referred to as one direction side (X1), and a direction toward the other end portion (110b) may be referred to as the other direction side (X2).

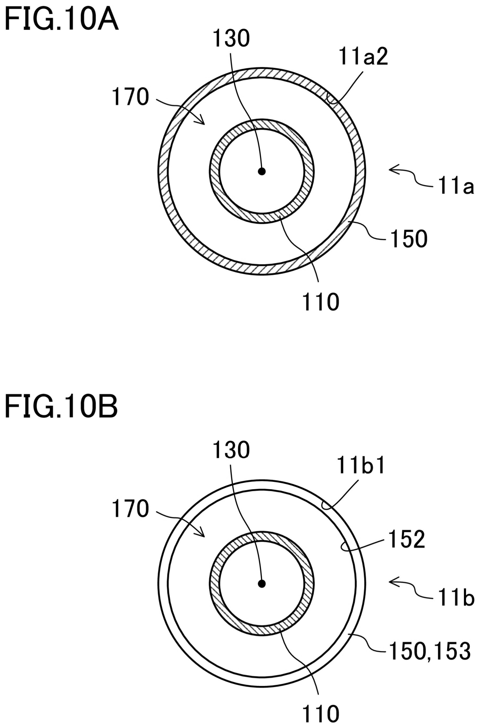

As illustrated in FIGS. 9, 10A, and 10B, holes (11a2, 11b1) causing the inside and outside of the housing (11) to communicate with each other are formed in the lower surface (11a) of the housing (11) and a side surface (11b) of the housing (11). The tube portion (110) is inserted into the housing (11) through the holes (11a2, 11b1).

The tube portion (110) includes the capturing portion (112), an outside-liquid portion (113), and an insertion portion (114). The tube portion (110) has such a shape that the insertion portion (114) is disposed in the housing (11) and the capturing portion (112) and the outside-liquid portion (113) protrude to the outside of the housing (11).

The capturing portion (112) is a portion of the tube portion (110) closer to the other end portion (110b), and is immersed in the liquid (E) in the tank (T). The capturing portion (112) is separated from the coil portion (15a), and is disposed below the housing (11). The capturing portion (112) is located at a position separated from the coil portion (15a). The capturing portion (112) is disposed inside the coil portion (15a) (see FIG. 3).

The outside-liquid portion (113) is a portion of the tube portion (110) closer to the one end portion (110a), and is present outside the liquid (E) (in atmospheric air). The outside-liquid portion (113) is disposed outside the housing (11), and is provided so as to protrude from the housing (11).

The insertion portion (114) is a portion of the tube portion (110) located between the capturing portion (112) and the outside-liquid portion (113) and disposed in the housing (11). The insertion portion (114) has a shape bent or curved at a substantially right angle.

The outside-liquid portion (113) includes a horizontal portion (113a). The horizontal portion (113a) is a portion of the outside-liquid portion (113) extending along the horizontal direction.

The magnet (120) is a permanent magnet. The magnet (120) has a spherical shape. A plurality of magnets (120) is arranged along the tube direction (X) in the tube portion (110). The shape of the magnet (120) is not particularly limited. The number of magnets (120) in the tube portion (110) is not particularly limited, and may be plural or singular.

The moving portion (130) is a member for moving the magnet (120) in the tube portion (110) along the tube direction (X). The moving portion (130) is a string-shaped member. The moving portion (130) is made of, for example, nylon. The material of the moving portion (130) is not particularly limited. One end (131) of the moving portion (130) is coupled to the magnet (120) in the tube portion (110). The other end (132) of the moving portion (130) extends to the outside of the tube portion (110) through the opening (111) of the tube portion (110). The worker or the like can pull the moving portion (130) with gripping the other end (132) of the moving portion (130).

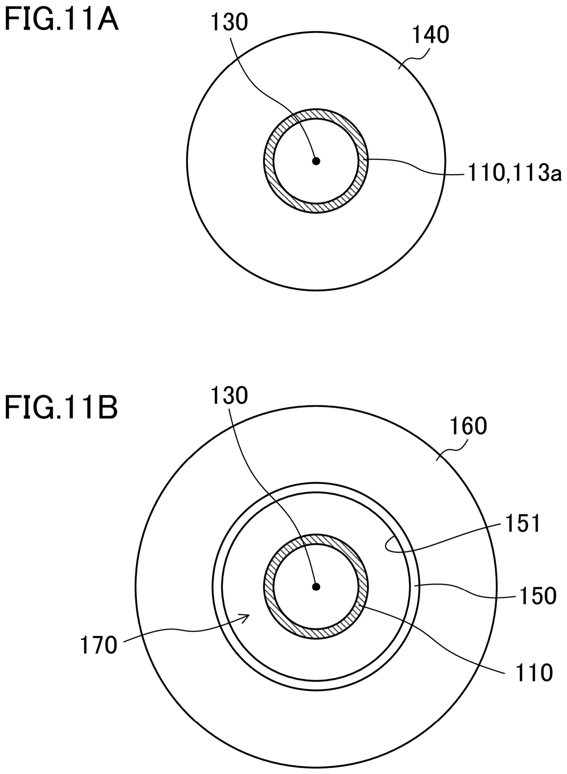

As illustrated in FIGS. 9 and 11A, the separation portion (140) is provided on the outer surface of the horizontal portion (113a), and has a shape protruding outward from the outer surface of the horizontal portion (113a). The separation portion (140) is a plate-shaped member formed in an annular shape along the circumferential direction of the horizontal portion (113a) and radially protruding from the outer surface of the horizontal portion (113a) in a direction perpendicular to the tube direction (X).

As illustrated in FIGS. 9, 10A, 10B, and 11B, the outer tube portion (150) is a tubular member having openings (151, 152) at both ends. The tube portion (110) is inserted into the outer tube portion (150) through the openings (151, 152). The outer tube portion (150) and the tube portion (110) form a double pipe. The opening (151) of the outer tube portion (150) at one end thereof is located below the lower surface (11a) of the housing (11). The opening (152) of the outer tube portion (150) at the other end thereof communicates with the hole (11b1) in the side surface (11b) of the housing (11).

Hereinafter, a space between the outer tube portion (150) and the tube portion (110) may be referred to as a passage (170).

The outer tube portion (150) is inserted into the housing (11) through the hole (11a2) in the lower surface (11a) of the housing (11). The outer tube portion (150) includes a first outer tube portion (153) and a second outer tube portion (154). The first outer tube portion (153) is located in the housing (11), and covers the insertion portion (114) of the tube portion (110). The second outer tube portion (154) is located outside the housing (11), and covers a portion of the tube portion (110) extending from the insertion portion (114) to the capturing portion (112) side.

As illustrated in FIGS. 9 and 11B, the flange portion (160) is provided on the outer surface of the second outer tube portion (154), and has a shape protruding outward of the outer surface of the second outer tube portion (154). The flange portion (160) is a plate-shaped member formed in an annular shape along the circumferential direction of the second outer tube portion (154) and radially protruding from the outer surface of the second outer tube portion (154) in a direction perpendicular to the tube direction (X).

A procedure for recovering the sludge from the liquid (E) using the sludge recovery device (100) will be described.

As illustrated in FIG. 9, when the capturing portion (112) of the tube portion (110) is immersed in the liquid (E) and disposed inside the coil portion (15a), the outside-liquid portion (113) is disposed in atmospheric air outside the liquid (E), and the magnet (120) is disposed inside the capturing portion (112) of the tube portion (110), sludge (G) in the liquid (E) adheres to the outer surface of the capturing portion (112) by the magnetic force of the magnet (120). The sludge (G) adheres to a portion of the outer surface of the capturing portion (112) located around the magnet (120). As a result, the sludge (G) is captured by the capturing portion (112).

When the moving portion (130) is pulled with the other end (132) of the moving portion (130) gripped, the magnet (120) in the tube portion (110) moves to the one direction side (X1) in the tube direction (X). Accordingly, the sludge (G) adhering to the outer surface of the tube portion (110) also moves to the one direction side (X1) in the tube direction (X) by the magnetic force of the magnet (120).

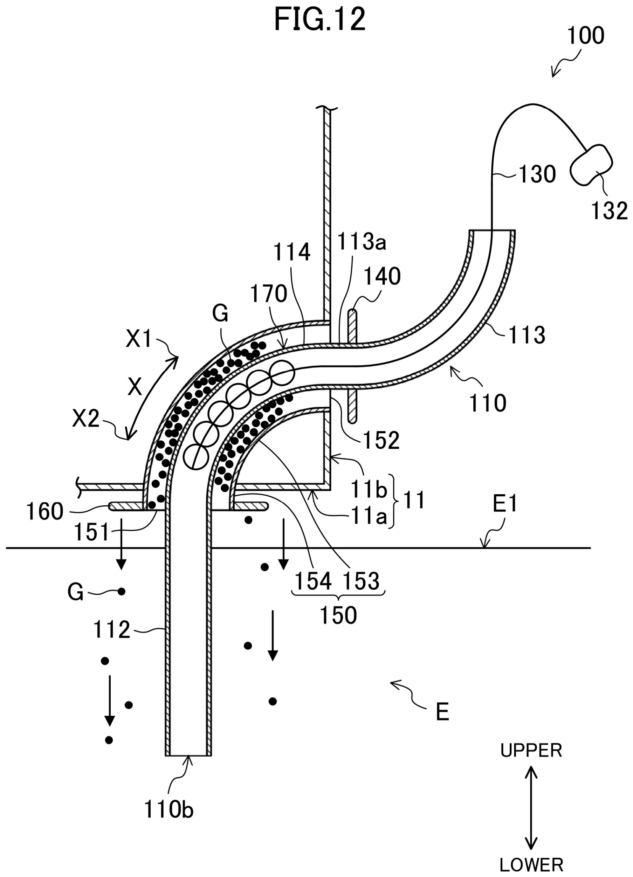

As illustrated in FIG. 12, the moving portion (130) is further pulled, and the magnet moves to a location where the tube portion (110) and the outer tube portion (150) form the double pipe in the tube portion (110). Thus, the sludge (G) adhering to the outer surface of the capturing portion (112) enters the passage (170) through the opening (151) of the outer tube portion (150) by the magnetic force of the magnet (120), and moves in the passage (170). At this time, the sludge (G) that could not enter the passage (170) is caught in the flange portion (160), whereby adherence of the sludge (G) to the lower surface (11a) of the housing (11) after movement to the housing (11) side can be reduced. Moreover, the sludge (G) moves in the passage (170) covered with the outer tube portion (150) in the housing (11), whereby accumulation of the sludge (G) in the housing (11) after leakage into the housing (11) can be reduced.

The moving portion (130) is further pulled, and the magnet (120) moves to a location where the outside-liquid portion (113) is located in the tube portion (110). As a result, the sludge (G) moving in the passage (170) also comes out of the passage (170) through the opening (152) of the outer tube portion (150), and adheres to the outer surface of the outside-liquid portion (113).

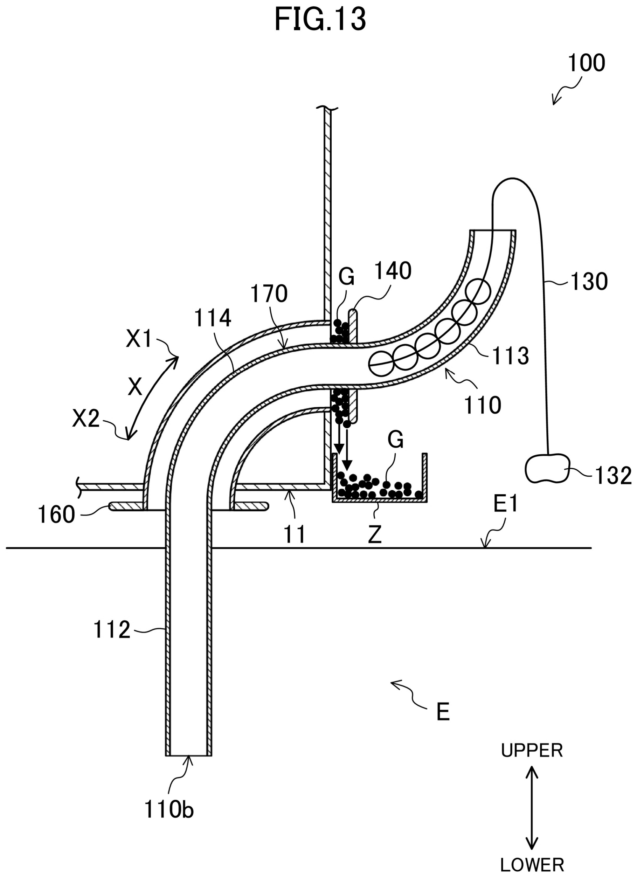

As illustrated in FIG. 13, when the moving portion (130) is further pulled, the sludge (G) moving together with the tube portion (110) by the magnetic force of the magnet (120) in the tube direction (X) is caught by the separation portion (140), whereas the magnet (120) passes through the separation portion (140). This disconnects the magnet (120) moved by the moving portion (130) and the sludge (G) adhering to the outer surface of the tube portion (110). As a result, the magnet (120) is separated from the sludge (G), and therefore, the magnetic force of the magnet (120) acting on the sludge (G) is reduced.

The magnetic force of the magnet (120) acting on the sludge (G) is reduced, and therefore, the sludge (G) drops from the separation portion (140) by its own weight and is housed in a container (Z). As a result, the sludge (G) in the liquid (E) can be collected, and an increase in the sludge (G) in the liquid (E) can be suppressed.

The ordinal numbers such as "first", "second", "third", ... , described above are used to distinguish the terms to which these expressions are given, and do not limit the number and order of the terms.

### INDUSTRIAL APPLICABILITY

As described above, the present disclosure is useful for a cooling apparatus.

### DESCRIPTION OF REFERENCE CHARACTERS

- 1: Cooling Apparatus
- 10: Refrigerant Circuit
- 11: Housing
- 12: Compressor
- 13: Condenser
- 14: Expansion Mechanism
- 15: Evaporator
- 15a: Coil Portion
- 22: Capturing Portion
- 112: Capturing Portion
- E: Liquid

## Claims

1. A cooling apparatus comprising:
a refrigerant circuit (10) to which a compressor (12), a condenser (13), an expansion mechanism (14), and an evaporator (15) are connected;
a housing (11) housing the compressor (12), the condenser (13), and the expansion mechanism (14);
a coil portion (15a) included in the evaporator (15), disposed below the housing (11), and immersed in liquid (E) to cool the liquid (E); and
a capturing portion (22, 112) configured to capture sludge in the liquid (E),
the capturing portion (22, 112) being disposed below the housing (11).

2. The cooling apparatus of claim 1, wherein
the capturing portion (22) includes a magnet (22b), and captures the sludge by a magnetic force of the magnet (22b).

3. The cooling apparatus of claim 1 or 2, wherein
the capturing portion (22, 112) is disposed inside the coil portion (15a).

4. The cooling apparatus of claim 3, further comprising:
a stirrer (17) disposed inside the coil portion (15a) and configured to stir the liquid (E) to generate a stirring flow in the liquid (E), wherein
the capturing portion (22) is disposed in a region where the stirring flow is generated.

5. The cooling apparatus of any one of claims 1 to 4, wherein
the capturing portion (22) has a rod shape extending along an up-down direction.

6. The cooling apparatus of claim 5, wherein
the capturing portion (22) has a circular outer shape in a section perpendicular to the up-down direction.

7. The cooling apparatus of any one of claims 1 to 6, wherein
the capturing portion (22) is detachably attached to the housing (11) or a leg (18) provided on a lower surface (11a) of the housing (11).

8. The cooling apparatus of claim 7, wherein
the housing (11) or the leg (18) is provided with a plurality of portions where the capturing portion (22) is attachable.

9. The cooling apparatus of any one of claims 1 to 8, wherein
a lower end of the capturing portion (22) is located below a lower end of the coil portion (15a).

10. The cooling apparatus of any one of claims 1 to 9, wherein
the capturing portion (22) is disposed inside the coil portion (15a), and is detachably attached to the lower surface (11a) of the housing (11), and
a clearance (C) is provided between the coil portion (15a) and the lower surface (11a) of the housing (11).

11. The cooling apparatus of claim 1, further comprising:
a non-magnetic tube portion (110);
a magnet (120) provided in the tube portion (110) and configured to cause the sludge to adhere to an outer surface of the tube portion (110) by a magnetic force;
a moving portion (130) for moving the magnet (120) in the tube portion (110); and
a separation portion (140) configured to disconnect the magnet (120) moved by the moving portion (130) and the sludge adhering to the outer surface of the tube portion (110), wherein
the moving portion (130) includes a string-shaped member coupled to the magnet (120) and extending to an outside of the tube portion (110) through an opening (111) in one end portion (110a) of the tube portion (110), and
the tube portion (110) includes the capturing portion (112) immersed in the liquid (E).
